# EUROPEAN PATENT APPLICATION

(11) **EP 4 484 050 A1**
(43) Date of publication of application: **01.01.2025**
(21) Application number: 24184963.7
(22) Date of filing: 27.06.2024
(51) Int. Cl.: B23K 35/02, B23K 35/28, B33Y 70/00, C22C 21/06

(54) **ALUMINUM ALLOY STRENGTHENED WITH SCANDIUM**

(30) Priority: 30.06.2023 US 202363524440 P; 24.06.2024 US 202418752205
(71) Applicant: Hobart Brothers LLC, Troy OH 45373 (US)
(72) Inventor: WILLIAMS, Carson Foster, Glenview, IL 60025 (US); LANGAN, Timothy James, Glenview, IL 60025 (US)
(74) Representative: HGF

(57) **Abstract**

The present disclosure relates generally to a 5xxx series aluminum filler alloy strengthened with scandium and containing a limited amount of zirconium. The alloy may be an aluminum-magnesium used for additive manufacturing. The aluminum-magnesium alloy may comprise 4.5 to 6.0 wt. % magnesium, 0.05 to 0.55 wt. % scandium, and a maximum allowable amount of 0.05 wt. % zirconium, the balance being aluminum and trace elements.

## Description

### CROSS-REFERENCE TO RELATED APPLICATION

This application claims benefit of priority from US Provisional Patent Application No. 63/524440, filed June 30, 2023, which is hereby incorporated by reference in its entirety herein.

### FIELD

The present disclosure relates generally to a 5xxx series aluminum filler alloy strengthened with scandium and containing a limited amount of zirconium. The alloy may be used for additive manufacturing.

### BACKGROUND

Aluminum alloy 5025 is a filler alloy. Aluminum alloy 5025 was previously registered with the Aluminum Association and is currently listed as "previously registered but inactive" in the Aluminum Association's Teal Sheets, which list all officially registered aluminum alloys recognized within the United States (see www.aluminum.org).

Even though aluminum alloy 5025 may be used for additive manufacturing applications, there exists a need for an improved 5xxx series aluminum filler alloy for additive manufacturing applications.

### SUMMARY

According to an aspect of the present disclosure, an aluminum-magnesium alloy for additive manufacturing comprises 4.5 to 6.0 wt. % magnesium, 0.05 to 0.55 wt. % scandium, and a maximum allowable amount of 0.05 wt. % zirconium, the balance being aluminum and trace elements.

It is to be understood that both the foregoing general description and the following detailed description describe various embodiments and are intended to provide an overview or framework for understanding the nature and character of the claimed subject matter. The description serves to explain the principles and operations of the claimed subject matter.

### DETAILED DESCRIPTION

In the following detailed description, specific details may be set forth to provide a thorough understanding of the embodiments of the present disclosure. However, it will be clear to one skilled in the art when disclosed examples may be practiced without some or all of these specific details. For the sake of brevity, well-known features or processes may not be described in detail. In addition, like or identical reference numerals may be used to identify common or similar elements.

One or more specific embodiments of the present disclosure will be described below. In an effort to provide a concise description of these embodiments, all features with an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

This present disclosure relates to a new or modified chemistry for a 5xxx series aluminum filler alloy, in particular, an alloy for wire-base additive manufacturing applications, but in general an alloy that may be used as a filler material/metal/alloy.

Aluminum (Al) alloy 5025 contains the alloying element scandium (Sc) that helps to make the alloy suitable for additive manufacturing. Additions of Sc grant multiple benefits to Al alloys; Sc acts as a significant grain refiner during solidification and inhibits recrystallization during annealing; Sc additions allow heat treating for the formation of Al₃Sc precipitates, which can add significant strengthening to the alloy; Sc can improve hot tearing and cracking resistance, as well as corrosion resistance. Sc is considered the most influential differentiator of alloy 5025, and similar alloys also exist (5028, 5024, "Scalmalloy") that make use of Sc additions.

Certain specific chemistry modifications provide the following benefits:

Zirconium (Zr) and titatinium (Ti) content reduction:
Zr and Ti form precipitates/secondary phases within aluminum alloys, specifically the precipitates Al₃Zr and A₃Ti. Formation of Al₃Zr and Al3Ti can lead to co-precipitation of Al₃Sc during solidification and heat treatment, as occurs in additive manufacturing applications. This co-precipitation actually reduces the effect and usefulness of Sc additions for the formation of the strengthening Al₃Sc phase. As such, by reducing Zr and Ti content, Applicant intends to increase the usefulness and effectiveness of Sc content in the filler alloy. For example, reducing Zr and Ti content should improve the workability/drawability of the alloy. By combining Sc with a reduced content of Zr, the alloy may exhibit advantageous properties. For example, the lack of Zr during rapid solidification (e.g., during printing) prevents or limits primary precipitation of Sc. Limited primary precipitation of Sc may improve the properties of the alloy.

Silicon (Si) content reduction:
Si exists in Al typically as a pure Si phase within the Al matrix. Si phases can act as nucleation sites for Al₃Sc during solidification, effectively tying up Sc. This effect inhibits the subsequent amount of strengthening that can be achieved through Al₃Sc formation from heat treatment. As such, by reducing Si content, Applicant intends to increase the usefulness and effectiveness of Sc content in the filler alloy.

Table 1 shows one embodiment of a proposed new chemistry according to the present disclosure.

**Table 1. Chemistry of Alloy 5025 and Proposed New Chemistry (5xxx-1) in weight percent (wt. %). Where a single numerical value appears in the table, it represents a maximum allowable amount.**

| | | | | | | | | | | | | **Others** | | |
|---|---|---|---|---|---|---|---|---|---|---|---|---|---|---|
| **Alloy** | **Si** | **Fe** | **Cu** | **Mn** | **Mg** | **Cr** | **Zn** | **Ti** | **Zr** | **Be** | **Sc** | **Each** | **Total** | **Al** |
| 5025 | 0.25 | 0.25 | 0.1 | 0.2 | 4.5-6.0 | 0.2 | 0.25 | 0.05-0.20 | 0.10-0.25 | 0.0003 | 0.05-0.55 | 0.05 | 0.15 | Rem. |
| 5xxx-1 | 0.5 | 0.5 | 0.3 | 1.0 | 4.5-6.0 | 0.5 | 1.0 | 0.3 | 0.05 | 0.0003 | 0.05-0.55 | 0.05 | 0.15 | Rem. |

According to aspects of the present disclosure, an aluminum alloy may comprise 4.5 to 6.0, or 5.0 to 6.0, or 5.2 to 6.0, or 5.5 to 6.0 wt. % magnesium. The aluminum alloy may comprise 0.05 to 0.55, or 0.10 to 0.50, or 0.15 to 0.45, or 0.20 to 0.40, or 0.25 to 0.35, or 0.3 wt. % scandium. The aluminum alloy may comprise a maximum allowable amount of 0.05, 0.04, 0.03, 0.02, 0.01, or 0.005 wt. % zirconium. The balance of the aluminum alloy may be aluminum and trace elements.

The trace elements may comprise silicon (Si), iron (Fe), copper (Cu), manganese (Mn), chromium (Cr), zinc (Zn), titanium (Ti), and beryllium (Be). The aluminum alloy may comprise a maximum allowable amount of 0.5, 0.2, or 0.1 wt. % silicon. The aluminum alloy may comprise a maximum allowable amount of 0.5, 0.25, or 0.1 wt. % iron. The aluminum alloy may comprise a maximum allowable amount of 0.3, 0.2, or 0.1 wt. % copper. The aluminum alloy may comprise a maximum allowable amount of 1.0, 0.8, 0.5, 0.2, or 0.1 wt. % manganese. The aluminum alloy may comprise a maximum allowable amount of 0.5, 0.2, or 0.1 wt. % chromium. The aluminum alloy may comprise a maximum allowable amount of 1.0, 0.6, 0.4, 0.25, or 0.1 wt. % zinc. The aluminum alloy may comprise a maximum allowable amount of 0.3, 0.2, or 0.1 wt. % titanium. The amount of beryllium may be limited to 0.0003 wt. %. Other trace elements may be present in a maximum allowable amount of up to 0.05 wt. % each, to a total of a maximum of 0.15 wt. %.

Where an alloying element amount is provided as a maximum allowable amount, typically it means that the alloying element is not intentionally added but that the element may be present in trace amounts.

According to aspects of the present disclosure, an aluminum alloy may be used in a wire-based additive manufacturing application, including printing.

The various aspects and embodiments disclosed herein are not intended to be limiting. Other embodiments may be utilized, and other changes may be made, without departing from the spirit or scope of the subject matter presented herein. It will be readily understood that the aspects of the present disclosure, as generally described herein and illustrated in the figures, can be arranged, substituted, combined, separated, and designed in a wide variety of different configurations, all of which are contemplated herein.

Certain embodiments of the invention are described in the following clauses:
Clause 1. An aluminum-magnesium alloy for additive manufacturing comprising:
   4.5 to 6.0 wt. % magnesium;
   0.05 to 0.55 wt. % scandium; and
   a maximum allowable amount of 0.05 wt. % zirconium;
   the balance being aluminum and trace elements.
Clause 2. The aluminum-magnesium alloy of clause 1, wherein the welding filler alloy is in the form of an electrode for additive manufacturing.
Clause 3. The aluminum-magnesium welding filler alloy of clause 1, comprising 0.10 to 0.50 wt. % scandium.
Clause 4. The aluminum-magnesium welding filler alloy of clause 1, comprising 0.15 to 0.45 wt. % scandium.
Clause 5. The aluminum-magnesium welding filler alloy of clause 1, comprising 0.20 to 0.40 wt. % scandium.
Clause 6. The aluminum-magnesium welding filler alloy of clause 1, comprising 0.25 to 0.35 wt. % scandium.
Clause 7. The aluminum-magnesium welding filler alloy of clause 1, comprising 0.3 wt. % scandium.
Clause 8. The aluminum-magnesium welding filler alloy of clause 1, comprising 5.0 to 6.0 wt. % magnesium.
Clause 9. The aluminum-magnesium welding filler alloy of clause 1, comprising 5.2 to 6.0 wt. % magnesium.
Clause 10. The aluminum-magnesium welding filler alloy of clause 1, comprising 5.5 to 6.0 wt. % magnesium.
Clause 11. The aluminum-magnesium welding filler alloy of clause 1, wherein the trace elements consist of:
   a maximum allowable amount of silicon of 0.5 wt. %;
   a maximum allowable amount of iron of 0.5 wt. %;
   a maximum allowable amount of copper of 0.3 wt. %;
   a maximum allowable amount of manganese of 1.0 wt. %;
   a maximum allowable amount of chromium of 0.5 wt. %;
   a maximum allowable amount of zinc of 1.0 wt. %;
   a maximum allowable amount of titanium of 0.3 wt. %;
   a maximum allowable amount of beryllium of 0.0003 wt. %; and
   other trace elements are allowable in a maximum weight percent of 0.05% each, the other trace elements together being allowable in a maximum weight percent of 0.15% total.
Clause 12. The aluminum-magnesium welding filler alloy of clause 1, comprising a maximum allowable amount of silicon of 0.20 wt. %.
Clause 13. The aluminum-magnesium welding filler alloy of clause 1, comprising a maximum allowable amount of iron of 0.25 wt. %.
Clause 14. The aluminum-magnesium welding filler alloy of clause 1, comprising a maximum allowable amount of copper of 0.1 wt. %.
Clause 15. The aluminum-magnesium welding filler alloy of clause 1, comprising a maximum allowable amount of manganese of 0.80 wt. %.
Clause 16. The aluminum-magnesium welding filler alloy of clause 1, comprising a maximum allowable amount of manganese of 0.50 wt. %.
Clause 17. The aluminum-magnesium welding filler alloy of clause 1, comprising a maximum allowable amount of manganese of 0.20 wt. %.
Clause 18. The aluminum-magnesium welding filler alloy of clause 1, comprising a maximum allowable amount of chromium of 0.20 wt. %.
Clause 19. The aluminum-magnesium welding filler alloy of clause 1, comprising a maximum allowable amount of zinc of 0.25 wt. %.
Clause 20. The aluminum-magnesium welding filler alloy of clause 1, comprising a maximum allowable amount of titanium of 0.1 wt. %.

## Claims

1. An aluminum-magnesium alloy for additive manufacturing comprising:
4.5 to 6.0 wt. % magnesium;
0.05 to 0.55 wt. % scandium; and
a maximum allowable amount of 0.05 wt. % zirconium;
the balance being aluminum and trace elements.

2. The aluminum-magnesium alloy of claim 1, wherein the welding filler alloy is in the form of an electrode for additive manufacturing.

3. The aluminum-magnesium welding filler alloy of claim 1, comprising 0.10 to 0.50 wt. % scandium.

4. The aluminum-magnesium welding filler alloy of claim 1, comprising 0.15 to 0.45 wt. % scandium.

5. The aluminum-magnesium welding filler alloy of claim 1, comprising 0.20 to 0.40 wt. % scandium, or
the aluminum-magnesium welding filler alloy comprising 0.25 to 0.35 wt. % scandium.

6. The aluminum-magnesium welding filler alloy of claim 1, comprising 0.3 wt. % scandium.

7. The aluminum-magnesium welding filler alloy of claim 1, comprising 5.0 to 6.0 wt. % magnesium, or
the aluminum-magnesium welding filler alloy comprising 5.2 to 6.0 wt. % magnesium, or
the aluminum-magnesium welding filler alloy comprising 5.5 to 6.0 wt. % magnesium.

8. The aluminum-magnesium welding filler alloy of claim 1, wherein the trace elements consist of:
a maximum allowable amount of silicon of 0.5 wt. %;
a maximum allowable amount of iron of 0.5 wt. %;
a maximum allowable amount of copper of 0.3 wt. %;
a maximum allowable amount of manganese of 1.0 wt. %;
a maximum allowable amount of chromium of 0.5 wt. %;
a maximum allowable amount of zinc of 1.0 wt. %;
a maximum allowable amount of titanium of 0.3 wt. %;
a maximum allowable amount of beryllium of 0.0003 wt. %; and
other trace elements are allowable in a maximum weight percent of 0.05% each, the other trace elements together being allowable in a maximum weight percent of 0.15% total.

9. The aluminum-magnesium welding filler alloy of claim 1, comprising a maximum allowable amount of silicon of 0.20 wt. %.

10. The aluminum-magnesium welding filler alloy of claim 1, comprising a maximum allowable amount of iron of 0.25 wt. %.

11. The aluminum-magnesium welding filler alloy of claim 1, comprising a maximum allowable amount of copper of 0.1 wt. %.

12. The aluminum-magnesium welding filler alloy of claim 1, comprising a maximum allowable amount of manganese of 0.80 wt. %, or
the aluminum-magnesium welding filler alloy comprising a maximum allowable amount of manganese of 0.50 wt. %, or
the aluminum-magnesium welding filler alloy comprising a maximum allowable amount of manganese of 0.20 wt. %.

13. The aluminum-magnesium welding filler alloy of claim 1, comprising a maximum allowable amount of chromium of 0.20 wt. %.

14. The aluminum-magnesium welding filler alloy of claim 1, comprising a maximum allowable amount of zinc of 0.25 wt. %.

15. The aluminum-magnesium welding filler alloy of claim 1, comprising a maximum allowable amount of titanium of 0.1 wt. %.
